# EUROPÄISCHE PATENTSCHRIFT

(11) **EP 0 743 969 B1**
(45) Veröffentlichungstag und Bekanntmachung des Hinweises auf die Patenterteilung: **05.08.1998**
(21) Anmeldenummer: 95906996.4
(22) Anmeldetag: 30.01.1995
(51) Int. Cl.: C09D 5/03, C09D 7/06, C08G 73/02

(54) **VERLAUFSMITTEL FÜR PULVERLACKE**
LEVELLING AGENT FOR COATING POWDERS
PRODUIT NIVELANT POUR LAQUES EN POUDRE

(30) Priorität: 08.02.1994 DE 4403953
(43) Veröffentlichungstag der Anmeldung: 27.11.1996
(73) Patentinhaber: Henkel Kommanditgesellschaft auf Aktien, 40191 Düsseldorf (DE)
(72) Erfinder: EICKEN, Ulrich, D-41352 Korschenbroich (DE); HASE, Brigitte, D-40699 Erkrath (DE); FISHER, Herbert, D-40229 Düsseldorf (DE); BIRNBRICH, Paul, D-42719 Solingen (DE); SCHULTE, Heinz-Günter, D-45481 Mülheim (DE); GRESS, Wolfgang, D-42111 Wuppertal (DE); FROMMELIUS, Harald, D-40789 Monheim (DE)
(86) Internationale Anmeldenummer: EP9500310
(87) Internationale Veröffentlichungsnummer: WO9521894

(56) Entgegenhaltungen:
- DE-A- 1 904 540
- DE-A- 3 421 525
- FR-A- 2 261 315
- US-A- 3 458 456
- US-A- 3 470 267
- US-A- 3 574 784
- US-A- 4 584 352
- DATABASE WPI Derwent Publications Ltd., London, GB; AN 77-02525Y[02] & JP,A,51 134 727 (MITSUBISHI RAYON KK) 23. November 1976

## Beschreibung

### Gebiet der Erfindung

Die Erfindung betrifft Polymere mit Oxazolin- und/oder Oxazin-Monomereinheiten enthaltende Verlaufsmittel für Pulverlacke und Verfahren zu ihrer Herstellung.

### Stand der Technik

Lösungsmittelarme bzw. lösungsmittelfreie Beschichtungssysteme gewinnen zunehmend an Bedeutung. Zu der Gruppe dieser Beschichtungssysteme gehört die Pulverbeschichtung, also die Beschichtung von Metallen und Kunststoffen durch Auftrag und Sinterung von wärmehärtenden Pulvern. Sie können im Rotations-, im Pulverspritz-, im Wirbelsinterbad-Verfahren und vor allem durch elektrostatische Beschichtung aufgetragen werden. Zur elektrostatischen Pulverbeschichtung eignen sich besonders duroplastische Pulverlacke aus Epoxid-, Polyester- und Acrylharzen. Beim Wirbelsintern werden Thermoplasten aus Polyamid, Polyester, Polyethylen, Polyethylenvinylacetat, Polyvinylchlorid und Polyepoxiden bevorzugt eingesetzt. Die Pulverbeschichtung wird vor allem bei Maschinenteilen und Haushaltsgeräten (z.B. Stahlmöbel) angewendet. Um das Verlaufen der Kunststoffpulver beim Einbrennen oder Sintern zu fördern, werden ihm Verlaufsmittel zugesetzt, so daß beim Auftragen entstehende Unebenheiten wie Streifen, Blasen, Krater, Orangenschalen-Strukturen und Nadelstiche weitgehend ausgeglichen werden. Als Verlaufsmittel sind u.a. Acrylatcopolymere bekannt. Dabei handelt es sich im allgemeinen um flüssige Produkte auf Polyacrylatbasis, wie z.B. die Handelsprodukte Perenol (R) F 40, Perenol (R) F 30 P mod (Firma Henkel) oder Modaflow (R) (Firma Monsanto), die grundsätzlich auf zwei verschiedene Arten in die Pulverlacke eingearbeitet werden können:
1. Man stellt einen sogenannten "Master-Batch" her, wobei das flüssige Verlaufsmittel in eine Bindemittelkomponente des Pulverlackes eingeschmolzen wird. Die erstarrte Schmelze wird anschließend gebrochen und für die weitere Verarbeitung konfektioniert.
2. Es wird ein inerter Träger für die flüssigen Produkte verwendet, z.B. Kieselsäure.

Nachteil der Master-Batch-Technologie ist, daß man in der Formulierung von Pulverlacken eingeschränkt ist, da das Bindemittel des Master-Batch mit dem Hauptbindemittel der Formulierung identisch oder mindestens verträglich sein muß.

Auf einen Träger aufgezogene Verlaufmittel können wegen der Unverträglichkeit des meist anorganischen Trägers mit dem Lackfilm zu einer Glanzverminderung des Lackes und zu einer Beeinträchtigung der Transparenz bei Klarlacken sowie unter ungünstigen Umständen zu einer Herabsetzung der Lagerstabilität des Pulverlackes führen.

Außerdem können mit beiden Methoden keine festen Verlaufsmittel mit 100 Gew. % Aktivsubstanz hergestellt werden. Um diese Nachteile zu beseitigen, wurden pulverförmige Verlaufsmittel auf Basis von Polyacrylaten entwickelt, insbesondere für die Klarlack-Herstellung, die weder einen inerten Träger noch ein Master-Batch-Verfahren erfordern. Ein derartiges Verlaufmittel ist z.B. in der EP-A1 0 355 676 beschrieben. Nachteilig an diesen festen Polyacrylaten ist, daß die mit geringen Mengen erreichbare Verlaufsverbesserung nicht ausreicht und bei Verwendung höherer Mengen zwar ausreichende Verlaufseigenschaften, aber trübe Filme resultieren.
Außerdem sind die Erweichungstemperaturen noch so niedrig, daß die Verlaufsmittel nach längerer Lagerung verklumpen können.

Polyoxazoline sind bekannte Verbindungen, die bei der Polymerisation von in 2-Stellung substituierten Oxazolinen erhalten werden. Die Herstellung von mit langkettigen Alkylgruppen substituierten Oxazolinen wird z.B. in der EP-A1 315 858 beschrieben. Die kationische Polymerisation von Oxazolinen wird z.B. von S. Kobayashi und T. Saegusa in der Monographie "Ring Opening Polymerization, Hrsg. K.J. Ivin, T. Saegusa, Vol. 2, S. 761-790, London, Elsevier, 1984, umfassend dargestellt.

Auch in 2-Stellung substituierte 5,6-Dihydro-4H-1,3-oxazine, im folgenden Oxazine genannt, sind bekannte Verbindungen, deren Synthese z.B. in der DE-A1 39 14 155 beschrieben ist.

Die Polymerisation der Oxazine wird in der oben genannten Monographie beschrieben (s. 791-795).

Auch die Copolymerisation von Oxazolinen und Oxazinen ist bekannt.

Die Herstellung der Polyoxazoline erfolgt durch eine lebende kationische Polymerisation. Es ist bekannt, diese Polymerisation in üblichen Aggregaten, z.B. Glasgefäßen oder Rührkesseln in Gegenwart von geeigneten Lösungsmitteln oder lösungsmittelfrei durchzuführen. Bei der Polymerisation in Abwesenheit von Lösungsmitteln besteht wegen der schnellen und stark exothermen Reaktion das Problem, die entstehende Wärme abzuführen. Dies geschieht im allgemeinen dadurch, daß nur ein Teil der Monomeren vorgelegt und polymerisiert wird und der Rest anschließend kontinuierlich so zugegeben wird, daß eine Abführung der Reaktionswärme durch Kühlung möglich bleibt.
Wird Phenyloxazolin auf diese Weise polymerisiert, führt die hohe Viskosität der Polymerschmelze bei der Polymerisationstemperatur dazu, daß die Schmelze in konventionellen Aggregaten nicht mehr gerührt werden kann. Damit kann weder die Polymerisationswärme abgeführt noch das entstehende Polymer weiterverarbeitet werden.

Die Aufgabe der Erfindung ist es, feste Verlaufsmittel mit 10 bis 100 Gew.%, bevorzugt mit 100 Gew.% Aktivsubstanzgehalt auf Basis von Polymeren mit Oxazolin- und/oder Oxazin-Monomereinheiten für Pulverlacke zur Verfügung zu stellen, die sich leicht in Pulverlacke einarbeiten lassen, im fertigen Pulverlack auch nach längerer Zeit nicht zum Verkleben des Pulvers führen und beim Einbrennen trübungsfreie oder glänzende Filme bilden. Insbesondere sollte für Pulverlacksysteme, die mit herkömmlichen Additiven nur unzureichende Verlaufseigenschaften aufwiesen, ein neues, besser geeignetes Verlaufsmittel zur Verfügung gestellt werden.
Eine weitere Aufgabe der Erfindung lag darin, Verfahren zur Herstellung von Verlaufsmitteln für Pulverlacke auf Basis von Polymeren mit Oxazolin- und/oder Oxazin-Monomereinheiten zur Verfügung zu stellen, die eine problemlose Abfuhr der Polymerisationswärme oder die Verarbeitung der hochviskosen Polymerschmelzen ermöglichen.

### Beschreibung der Erfindung

Gegenstand der Erfindung sind die Verwendung von Polymeren als Verlaufsmittel für Pulverlacke, die ein oder mehrere Polymere, die Monomereinheiten 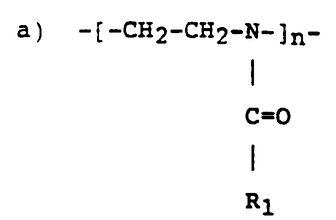 und/oder 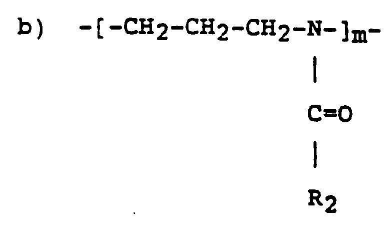 enthalten, bei denen R₁ und R₂ unabhängig voneinander Wasserstoff,
und/oder einen gegebenenfalls hydroxysubstituierten Kohlenwasserstoffrest mit 1 bis 36 C-Atomen,
und/oder einen gegebenenfalls im aromatischen Kern substituierten Aryl- oder Aralkylrest,
und/oder einen Rest der allgemeinen Formel I

   R₃-(OC₂H₅)ₚ-O-CH₂- (I)

   in der
R₃ eine Alkyl- oder Alkenylgruppe mit 1 bis 18 C-Atomen, insbesondere eine Methylgruppe, und p eine Zahl von 1 bis 10 ist,
darstellen und
die Indices n und m unabhängig voneinander Zahlenwerte von 0 bis 1000 annehmen können, mit der Maßgabe, daß die Summe n + m zwischen 2 und 1000 liegt,
sowie gewünschtenfalls andere in Pulverlacken übliche Additive enthalten.

Die Reste R₁ und R₂ können Wasserstoff oder einen ggf. verzweigten Kohlenwasserstoffrest mit 1 bis 36 C-Atomen darstellen. Die entsprechenden Monomere sind beispielsweise unsubstituierte Oxazoline oder Oxazine oder Methyl-, Ethyl-, n-Propyl-, i-Propyl, n-Butyl-, i-Butyl, t-Butyl-, n-Pentyl-, n-Hexyl-, n-Heptyl-, 2-Ethylpentyl-, n-Octyl-, 2-Ethylhexyl-, n-Nonyl-, n-Undecyl-, n-Tridecyl-, n-Pentadecyl-, n-Heptadecyl-, i-Stearyl-, n-Nonadecyl- und n-Heneicosanyl- n-Tricosan-, n-Pentacosan-, n-Heptacosan-, n-Nonacosanoxazolin oder -oxazin.

Der Kohlenwasserstoffrest kann OH-substituiert sein und z.B. einen 5-Hydroxypentyl- oder 11-Hydroxy-8-heptadecenylrest darstellen.

Die Reste R₁ und R₂ können auch aromatische oder mit Alkylgruppen substituierte aromatische Reste darstellen, z.B. Phenyl-, Naphthyl-, 2-Methylphenyl-,4-Methylphenyl-, 4-t-Butylphenyl- oder 2-t-Butylphenylreste.

Auch andere Substituenten im aromatischen Kern, wie z.B. Halogengruppen, Hydroxylgruppen, Alkoxygruppen oder Nitrogruppen sind möglich.

Weiterhin können die Reste R₁ und R₂ die allgemeine Formel I

R₃-(OC₂H₅)ₚ-O-CH₂- (I)

in der R₃ eine Alkyl- oder Alkenylgruppe mit 1 bis 18 C-Atomen, insbesondere eine Methylgruppe, und p eine Zahl von 1 bis 10 ist, darstellen.

Die entsprechenden Monomeren leiten sich von Ethercarbonsäuren der Formel II

R₃-(OC₂H₅)ₚ-O-CH₂-COOH (II)

ab, die z.B. aus ethoxylierten Alkoholen durch Umsetzung mit Chloressigsäure erhältlich sind.

Die erfindungsgemäßen Polymere werden aus Oxazolin- und/oder Oxazin-Monomeren oder Mischungen dieser Monomeren mit gleichen oder verschiedenen Substituenten R₁ und R₂ durch kationische Polymerisation hergestellt.

Die Polymeren können zwischen 50 bis 100 mol% Monomereinheiten a) und zwischen 0 bis 50 mol% Monomereinheiten b) enthalten. Bevorzugt sind Polymere, die ausschließlich Monomereinheiten a) enthalten, also Polyoxazoline.

Gemäß einer vorteilhaften Ausführungsform der Erfindung sind Polymere, die ausschließlich Oxazolin-Monomereinheiten enthalten bevorzugt, bei denen der Rest R₁ ein linearer oder verzweigter, gesättigter oder einfach ungesättigter Kohlenwasserstoffrest mit 7 bis 36 Kohlenstoffatomen, insbesondere ein linearer, gesättigter Kohlenwasserstoffrest mit 11 bis 17 Kohlenstoffatomen oder ein Phenylrest ist. Die Monomeren derartiger Polyoxazoline leiten sich von gesättigten oder einfach ungesättigten Fettsäuren natürlichen oder synthetischen Ursprungs (einschließlich technischer Gemische derselben) entsprechender Kettenlänge oder von Benzoesäure ab.

Typische Vertreter der vorstehend genannten natürlichen Fettsäuren sind Capryl-, Caprin-, Laurin-, Myristin-, Palmitin-, Stearin-, Arachin-, Lignocerin- und Behensäure, sowie 12-Hydroxystearin- und Ricinolsäure.
Auch die sogenannten Montansäuren können als Ausgangsmaterialien für Oxazolin-Monomere verwendet werden.

Im Rahmen der Erfindung können Homopolymere aus Monomereinheiten a) verwendet werden, es ist aber auch möglich, Copolymere einzusetzen, bei denen R₁ verschiedene erfindungsgemäße Reste darstellt. Besonders bevorzugt ist die Verwendung von Copolymeren, bei denen R₁ einen gesättigten Alkylrest mit 11 bis 17 C-Atomen und einen Phenylrest darstellt.

Es können sowohl statistische als auch Blockcopolymere eingesetzt werden. Bevorzugt werden statistische Copolymere eingesetzt, die man durch Polymerisation einer Mischung der verschiedenen Monomeren erhalten kann. Blockcopolymere können auf an sich bekannte Weise durch sequentielle Polymerisation verschiedener Monomerarten erhalten werden.

Auch physikalische Gemische verschiedener Polyoxazoline sind einsetzbar.

Der Polymerisationsgrad ist die Anzahl der Monomereinheiten in einem Polymermolekül. Wie dem Fachmann bekannt, ergibt sich bei einer kationischen lebenden Polymerisation der Polymerisationsgrad (Zahlenmittel) des gesamten Polymeren direkt aus dem Quotienten der Anzahl der Monomermoleküle und der Anzahl der Startermoleküle. Der mittlere (Zahlenmittel) Polymerisationsgrad der erfindungsgemäßen Polymere, d.h. die Summe der Indices m + n beträgt zwischen 2 und 1000, bevorzugt zwischen 5 und 25, besonders bevorzugt zwischen 5 und 15.

Als Starter können die dem Fachmann bekannten Verbindungen eingesetzt werden, z.B. Methyltosylat, Methyltriflat, Bortrifluorid oder starke Mineralsäuren wie Toluolsulfonsäure oder Perchlorsäure. Es ist aber auch möglich, Alkylhalogenide wie z.B. Methyliodid, ggf. in Kombination mit Salzen wie Lithiumperchlorat zu verwenden.

Entsprechend dem Polymerisationsgrad liegen die Startermengen zwischen 50 und 0,1 mol% bezogen auf die molare Menge an Monomeren.

Die Polymerisation der Oxazoline oder Oxazine erfolgt über einen lebenden Mechanismus, d.h. durch Zugabe von frischem Monomeren kann die Polymerisation immer wieder fortgesetzt werden. Entsprechend können in den erfindungsgemäßen Polymeren kationische Oxazolinium- oder Oxazinium-Endgruppen vorliegen. Diese Endgruppen können jedoch auch mit Nucleophilen wie Wasser, OH-Gruppen oder Aminogruppen unter Ausbildung kovalenter Bindungen abreagiert sein.

Der Schmelzbereich der Polymeren liegt zwischen 40 und 200 °C, bevorzugt zwischen 50 bis 100 °C.

Nach einem Verfahren zur Herstellung der Polymere aus Monomereinheiten a) und/oder b) enthaltenden Verlaufsmitteln werden die Monomeren in einem gegenüber der Polymerisation inerten organischen Träger gelöst und anschließend polymerisiert. Unter inert ist zu verstehen, daß der vollständige Ablauf der Polymerisation nicht verhindert wird. Als inerte organische Träger eignen sich z.B. Fettalkohole, bevorzugt gesättigte Fettalkohole, gehärtetes Ricinusöl oder andere OH-funktionelle Verbindungen.
Die Mengen des inerten organischen Trägers liegen zwischen 10 und 200 Gew.%, bevorzugt zwischen 50 und 150 Gew.% bezogen auf das Oxazolin- oder Oxazin-Monomere. Nach dem Auflösen des Monomeren oder des Monomerengemisches im Träger wird der Starter zugefügt und die Mischung in einem üblichen Reaktionsgefäß solange erwärmt, bis eine exotherme Reaktion einsetzt. In der Regel ist das bei Temperaturen von 50 - 150 °C der Fall. Nach Abklingen der exothermen Reaktion wird, falls erforderlich, auf eine Temperatur von 150 bis 160 °C erwärmt und die Reaktionsmischung noch 3 bis 5 Stunden zur Vervollständigung der Polymerisation gerührt.

Die Polymeren lassen sich aus Monomereinheiten a) und/oder b) auch mit Hilfe eines Extruders herstellen. Dies ist besonders bei den besonders viskosen Polymeren auf Basis von Phenyloxazolin oder Copolymeren, die Phenyloxazolin enthalten, von Vorteil. Zur Durchführung des Verfahrens wird das Monomere oder die Monomermischung mit dem Starter vermischt. Die flüssige Mischung wird über eine Dosiereinrichtung in den Extruder gegeben. Die Temperatur des Extruders liegt zwischen 100 und 300 °C. Es hat sich besonders bewährt, die Temperatur innerhalb der Extrusionsstrecke zu steigern, beispielsweise von 100 °C im Einzugsbereich über 150 bis 200 °C im Heizbereich auf 210 bis 300 °C in der Auslaßdüse. Die Polymerisation findet im Extruder statt. Aus der Düse wird das fertige Polymere auf ein Kühlband gefördert. Das Verfahren erlaubt, auch sehr viskose Polymere, wie z.B. Polyphenyloxazolin herzustellen und zu verarbeiten.

Die Polymeren aus Monomereinheiten a) und/oder b) können auch dadurch hergestellt werden, daß ein Teil der Monomeren mit der gesamten Menge an Starter in einem üblichen Reaktionsgefäß mit Rührer vorgelegt und unter Rühren erwärmt wird bis die Polymerisation einsetzt.
Anschließend wird die restliche Monomermenge bei Temperaturen von 120 bis 180 °C, bevorzugt 140 bis 160 °C so rasch zugegeben, daß die entstehende Polymerisationswärme durch Kühlung abgeführt werden kann. Nach Beendigung der Zugabe wird noch für etwa 30 Minuten bei einer Temperatur von etwa 150 °C zur Vervollständigung der Reaktion gerührt.

Die Polymeren eignen sich für die Verwendung als Verlaufsmittel für Pulverlacke.

Pulverlacke werden im allgemeinen wie folgt hergestellt:
- Das Bindemittel wird mit Pigmenten, Härter und Additiven in einem Mischer intensiv homogenisiert.

Als Additive kommen vor allem Verlaufshilfsmittel, Fettsäureester wie gehärtetes Ricinusöl, Mittel zur Verhinderung von Nadelstichen wie Benzoin, Mattierungsmittel wie Polyethylenwachse oder Kieselsäure, Härtungsbeschleuniger oder UV-Stabilisatoen in Betracht.
Die zugefügten Mengen können je nach Anwendung zwischen 0,1 und 5 Gew.% bezogen auf den Pulverlack liegen.
Obwohl die Additive üblicherweise als Einzelsubstanzen zugefügt werden, ist es selbstverständlich möglich, die verschiedenen Additive zu einem einzigen Compound mit der Bezeichnung Verlaufshilfsmittel zu mischen.
Die Menge an Polymeren, die Monomer-Einheiten a) und/oder b) enthalten, in diesem Compound kann zwischen 10 und 100, bevorzugt zwischen 20 und 80 Gew.% bezogen auf Compound liegen.
- Die Mischung aus Bindemittel, Pigmenten und Additiven wird extrudiert.
- Das Extrudat wird grob und anschließend fein zu einem verarbeitungsfähigen Pulverlack vermahlen.

Die durch die Polymeren aus Monomereinheiten a) und/oder b) in ihren Verlaufseigenschaften zu verbessernden Pulverlacke enthalten thermoplastische oder duromere Kunstharze und 0,1 bis 2,0 Gew.-%, bevorzugt 0,5 bis 1 Gew.-% - bezogen auf das Gesamtgewicht der Pulverlacke - eines oder mehrerer der erfinderischen Polymere sowie gegebenenfalls Pigmente sowie übliche Additive wie Härtungsmittel , Härtungsbeschleuniger und UV-Stabilisatoren. Bevorzugt sind Pulverlacke auf Basis von Epoxiden für die Vernetzung mit carboxylfunktionellen Polyestern (sogenannte Hybridsysteme) sowie von carboxylfunktionellen Polyestern für die Vernetzung mit Triglycidylisocyanuraten.
Insbesondere ist es aber auch möglich, Pulverlacke auf Basis von hydroxyfunktionellen Polyacrylaten und blockierten mehrfunktionellen Isocyanaten, wie sie unter der Bezeichnung Crelan^{R} VP LS 2995/2007 (Bayer) im Handel sind, zu verwenden. Für diese Pulverlacke eignen sich die erfindungsgemäßen Polymere besser als andere Verlaufsmittel.

Die Vorteile bei der neuen Verwendung der Verlaufsmittel liegen im wesentlichen in der leichten Verarbeitbarkeit zu Pulverlacken, z.B. beim Trockenmischen und Dosieren, in der höheren Lagerstabilität, z.B. kein Zusammenbacken, und in dem besseren Verlaufs-Verhalten, z.B. nicht nur Vermeidung von "Fischaugen", "Kratern" und "Nadelstichen", sondern auch deutliche Verringerung des Orangenschaleneffektes.

Vor allem gestatten die Polymeren die Herstellung völlig schleierfreier Klarlackfilme und von glänzenden pigmentierten Filmen.

### Beispiele

Alle Prozentangaben in den Beispielen verstehen sich, sofern nicht anders angegeben, als Gewichtsprozent.

Die Produkte wurden folgendermaßen charakterisiert:
1. Der Schmelzbereich wurde mit einer Kofler-Heizbank oder über DSC (Differential Scanning Calorimetry) bestimmt.
2. Das Molekulargewicht wurde mittels GPC relativ zu Polystyrol-Standards bestimmt.
3. Die OH-Zahl wurde nach DIN 53240 bestimmt.

### Beispiel 1:

In einen 1 l Dreihalskolben mit Rührer, Innenthermometer, Tropftrichter, Rückflußkühler und Stickstoffeinleitung wurden 90,8 g Nonyloxazolin (0,46 mol) mit 42,8 g para-Toluolsulfonsäuremethylester (0,23 mol) vermischt und auf 60 °C aufgeheizt. Dabei setzte eine stark exotherme Reaktion ein, die die Temperatur bis auf 120 °C steigen ließ. Nach Abklingen der Exothermie wurde auf 160 °C aufgeheizt und weitere 363 g Nonyloxazolin (1,84 mol) unter Rühren so zugetropft, daß die Temperatur nicht über 170 °C stieg. Nach 1 Stunde war die Zugabe beendet. Es wurde noch 1 Stunde bei 160 °C gerührt. Das Polymer wurde auf eine Teflonfolie ausgegossen und nach dem Abkühlen zu einem gelblichen Pulver vermahlen. Das Molekulargewicht liegt bei 2300 (Gewichtsmittel), der Schmelzbereich zwischen 59 bis 93 °C (DSC).

### Beispiel 2:

Analog Beispiel 1 wurden 103,5 g Undecyloxazolin mit 42,8 g para-Toluolsulfonsäuremethylester umgesetzt und anschließend weitere 414 g Undecyloxazolin bei 160 °C zugefügt. Nach Vermahlung erhielt man ein gelbliches Pulver. Das Polymer hat ein Molekulargewicht von 2600 (Gewichtsmittel) und einen Schmelzbereich zwischen 59 bis 96 °C (DSC).

### Beispiel 3:

Analog Beispiel 1 wurden 142,4 g Heptadecyloxazolin mit 42,8 g para-Toluolsulfonsäuremethylester umgesetzt und anschließend weitere 570 g Heptadecyloxazolin bei 160 °C zugefügt. Nach Vermahlung erhielt man ein gelbliches Pulver. Das Polymer hat ein Molekulargewicht von 3900 (Gewichtsmittel) und einen Schmelzbereich zwischen 50 bis 94 °C (DSC).

### Beispiel 4:

In einen 1 l Dreihalskolben mit Rührer, Innenthermometer, Tropftrichter, Rückflußkühler und Stickstoffeinleitung wurden 356 g hydriertes Ricinusöl und 356 g n-Heptadecyloxazolin bei 80 °C unter Rühren aufgeschmolzen. Bei dieser Temperatur wurden 21,4 g para-Toluolsulfonsäuremethylester zugegeben. Sofort setzte eine stark exotherme Reaktion ein, die die Temperatur bis auf 180 °C steigen ließ. Nach Abklingen der Exothermie wurde auf 160 °C gekühlt und weitere 3 Stunden bei dieser Temperatur gerührt.

Das Produkt wurde auf eine Teflonfolie ausgegossen und nach dem Abkühlen zu einem gelblichen Pulver vermahlen.

### Beispiel 5:

### Herstellung von Polyoxazolinen im Extruder

Aus 765,6 Phenyloxazolin (4,4 mol), 217,3 g n-Nonyloxazolin (1,1 mol) und 10,3 g para-Toluolsulfonsäuremethylester (0,055 mol) wurde eine Mischung hergestellt. Über einen Tropftrichter wurde die Mischung mit einer Rate von 10 ml/min in einen Extruder der Firma Brabender mit der Bezeichnung DSK 47/7 gegeben.
Die Drehzahl betrug 20 U/min, das Drehmoment 0,8 bis 1 N·m und der Druck 1 bar.

| Temperaturprofil: | | |
|---|---|---|
| T1 | Einzugsbereich | 130 °C |
| T2 | 2. Heizzone | 190 °C |
| T3 | 3. Heizzone | 210 °C |
| T4 | Breitbanddüse | 220 °C |

Man erhielt ein bernsteinfarbenes Polymer mit einer Viskosität von 17 Pa·s bei 200 °C, gemessen mit dem cone&plate-Viskosimeter bei einer Scherrate von 625 s⁻¹.

### Beispiel 6:

Aus 1331,5 Phenyloxazolin (9,06 mol), und 168,5 g para-Toluolsulfonsäuremethylester wurde eine Mischung hergestellt.

Über einen Tropftrichter wurde die Mischung mit einer Rate von 10 ml/min in einen Extruder der Firma Brabender mit der Bezeichnung DSK 47/7 gegeben.
Die Drehzahl betrug 20 U/min, das Drehmoment 0,8 bis 1 N·m und der Druck 1 bar.

| Temperaturprofil: | | |
|---|---|---|
| T1 | Einzugsbereich | 130 °C |
| T2 | 2. Heizzone | 190 °C |
| T3 | 3. Heizzone | 210 °C |
| T4 | Breitbanddüse | 220 °C |

Man erhielt ein bernsteinfarbenes Polymer mit einer Viskosität von 2,6 Pa·s bei 200 °C, gemessen mit dem cone&plate-Viskosimeter bei einer Scherrate von 625 s⁻¹ und einem Schmelzbereich von 155 bis 165 °C.

### Beispiel 7:

Analog zu Beispiel 6 wurde eine Mischung aus 877,8 g Phenyloxazolin (5,97 mol) und 222,2 g Methyltosylat (1,19 mol) hergestellt und in einen Extruder gegeben.

Man erhielt ein bernsteinfarbenes Polymer mit einer Viskosität von 0,4 Pa·s bei 200 °C, gemessen mit dem cone&plate-Viskosimeter bei einer Scherrate von 625 s⁻¹ und einem Schmelzbereich von 135 bis 140 °C.

### Anwendungstechnische Prüfung:

Zur Prüfung der Eignung der erfindungsgemäß einzusetzenden Copolymeren als Verlaufmittel wurden diese in folgenden Pulverlacksystemen getestet.

### A Epoxid-Polyester-Lack (Hybrid-System)

Eine Pulverlackzusammensetzung aus 50 Gew.-Teilen eines Epoxidharzes I, 50 Gew.-Teilen eines Polyesterharzes II und 0,5 Gew.-Teilen Benzoin wurde unter Zusatz von 1 Gew.-Teil des zu prüfenden Verlaufmittels vermischt; die Mischung wurde anschließend extrudiert, granuliert, vermahlen und gesiebt. Die erhaltenen Pulverlacke wurden elektrostatisch auf eine Metalloberfläche gebracht und 12 min bei 180 °C eingebrannt. Das eingesetzte Epoxidharz war ein handelsübliches Produkt auf Basis von Bisphenol A und Epichlorhydrin. Das eingesetzte ölfreie Polyester-Harz war ebenfalls ein handelsübliches Produkt mit freien Carboxylgruppen. Die Harze hatten folgende Kenndaten:

| | I | II |
|---|---|---|
| Epoxid-Äquivalentgewicht | 715-835 | - |
| Glasumwandlungstemperatur °C | - | 43-48 |
| Erweichungsbereich (Kofler) °C | 70-80 | 70-80 |
| Säurezahl (DIN 53402) Schmelzviskosität Pa·s | - | 65-80 |
| (DIN 53229/160 °C/Kegelplatte) | - | 8-16 |
| (DIN 53735 21.2 N/120 °C | ca.50 | - |

Die Einbrennbedingungen waren 5 min bei 200 °C, 8 min bei 180 °C oder 17 min bei 165 °C (die angegebenen Temperaturen beziehen sich jeweils auf die Objekttemperatur).

### B Polyester-Lack

Analog zu der unter A beschriebenen Weise wurde aus 93 Gew.-Teilen eines Polyesterharzes (III) mit freien Carboxylgruppen und 7 Gew.-Teilen Triglycidylisocyanurat unter Zusatz von 1 Gew.-Teil Verlaufsmittel ein Pulverlack hergestellt und auf eine Metalloberfläche appliziert. Das Polyesterharz wies die folgenden Kenndaten auf:

| | III |
|---|---|
| Erweichungspunkt (Kofler) | 77-87 °C |
| Glasumwandlungstemperatur | 55-60 °C |
| Schmelzviskosität DIN 53229, 160 °C, Kegel/Platte | 30-60 Pa·s |
| Säurezahl DIN 53402 | 30-36 mg KOH/g |

Die Einbrennbedingungen waren 5 min bei 200 °C, 8 min bei 180 °C oder 17 min bei 165 °C (die angegebenen Temperaturen beziehen sich jeweils auf die Objekttemperatur).

### C Acrylat/geblocktes Isocyanat (Polyurethan-Lack)

Analog zu der unter A beschriebenen Weise wurde aus 65 Gew.-Teilen eines hydroxylgruppenhaltigen Acrylatharzes (IV) mit der Bezeichnung Crelan^{R} VP LS 2995 (Bayer) und 35 Gew.--Teilen eines verkappten Isocyanates (V) mit der Bezeichnung Crelan^{R} VP LS 2007 (Bayer) unter Zusatz von 1 Gew.-Teil Verlaufsmittel und 0,3 Gew.-Teilen Benzoin ein Pulverlack hergestellt und auf eine Metalloberfläche appliziert. Die Harze hatten folgende Kenndaten:

| | IV | V |
|---|---|---|
| Jodfarbzahl DIN 6162 | | |
| 50 %ig in Aceton | ≤ 2 | - |
| 60 %ig in Tetrahydrofuran | - | 2 |
| Hydroxylgehalt DIN 53240 | 2,4% | - |
| Säurezahl DIN 53402 | 15 | - |
| NCO-Gehalt | - | 10% |

Die Einbrennbedingungen waren 15 Minuten bei 180 °C oder 10 min bei 200 °C Objekttemperatur.

Die Verlaufmittel gemäß den Beispielen ließen sich einwandfrei verarbeiten und blieben rieselfähig.

Die erhaltenen Klarlacke zeigten sichtbar keinerlei Trübung, selbst bei Schichtdicken von > 100 µm.

Die Ergebnisse der Verlaufprüfungen sind in der folgenden Tabelle dargestellt.

**Tabelle:**

| Lacksystem | Additiv | Bewertung | Trübung |
|---|---|---|---|
| A Polyester/ Epoxid | - | 5 | nein |
| | Bsp 1 | 3 | nein |
| | Bsp 3 | 1 | nein |
| | Bsp 7 | 4 | nein |
| | F 30 p | 1-2 | ja |
| | mod | | |
| B Polyester/ TGIC | - | 5 | nein |
| | Bsp 1 | 3 | nein |
| | Bsp 2 | 3 | nein |
| | Bsp 3 | 1 | nein |
| | F 30 p | 1 | ja |
| | mod | | |
| C Polyacrylat/ Isocyanat | - | 5 | nein |
| | Bsp 2 | 1 | nein |
| | Bsp 3 | 0-1 | nein |
| | F 30 p | 2-3 | ja |
| | mod | | |
| TGIC ist Trisglycydylisocyanurat F 30 p mod ist ein festes Verlaufsmittel auf Basis eines auf SiO₂ aufgezogenen Polyacrylats (Perenol F 30 p mod, Henkel). | | | |

### Bewertung des Verlaufs:

0 hervorragender Verlauf, nahezu ebene Filmoberfläche
1 gut verlaufen, leichte Struktur,
2 mäßiger Verlauf, Orangenschalen-Effekt
3 wie 2, vereinzelt Nadelstiche, leichte Dellen
4 mäßiger Verlauf, vereinzelt Krater, viele Nadelstiche
5 schlechter Verlauf, viele Krater

Verlaufsergebnisse mit der Bewertung 1 bis 2 sind bei Pulverlacken üblich und werden technisch akzeptiert.

## Patentansprüche

1. Verwendung eines oder mehrerer Polymeren, die Monomereinheiten 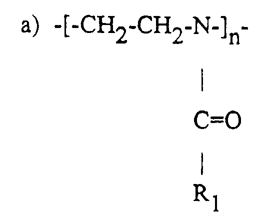 und/oder 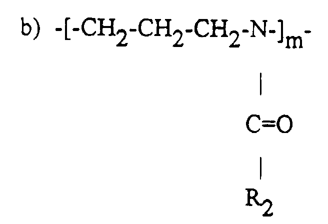 enthalten, bei denen R₁ und R₂ unabhängig voneinander Wasserstoff,
und/oder einen gegebenenfalls hydroxysubstituierten Kohlenwasserstoffrest mit 1 bis 36 C-Atomen,
und/oder einen gegebenenfalls im aromatischen Kern substituierten Aryl- oder Aralkylrest,
und/oder einen Rest der allgemeinen Formel I
R₃-(OC₂H₅)ₚ-O-CH₂- (I)
in der
R₃ eine Alkyl- oder Alkenylgruppe mit 1 bis 18 C-Atomen, insbesondere eine Methylgruppe, und p eine Zahl von 1 bis 10 ist,
darstellen und
die Indices n und m unabhängig voneinander Zahlenwerte von 0 bis 1000 annehmen können, mit der Maßgabe, daß die Summe n + m zwischen 2 und 1000 liegt,
gewünschtenfalls zusammen mit anderen in Pulverlacken üblichen Additiven, als Verlaufsmittel für Pulverlacke.

2. Verwendung nach Anspruch 1, dadurch gekennzeichnet, daß die Polymeren
50 bis 100 mol% Monomereinheiten a) und
0 bis 50 mol% Monomereinheiten b)
bezogen auf die gesamte molare Menge an Monomereinheiten a) + b) enthalten.

3. Verwendung nach einem der Ansprüche 1 oder 2, dadurch gekennzeichnet, daß die Reste R₁ und R₂ lineare Kohlenwasserstoffreste mit 11 bis 17 C-Atomen und/oder Phenylreste darstellen.

4. Verwendung nach einem der Ansprüche 1 bis 3, dadurch gekennzeichnet, daß die Summe der Indices n + m zwischen 5 und 25 liegt.

5. Verwendung nach einem der Ansprüche 1 bis 4, dadurch gekennzeichnet, daß sie Mischungen aus
10 bis 100 Gew.% an Polymeren aus Monomer-Einheiten a) und/oder b) und
0 bis 90 Gew.% anderer in Pulverlacken üblicher Additive
bezogen auf das Verlaufsmittel darstellen.

## Claims

1. The use of one or more polymers containing the following monomer units: 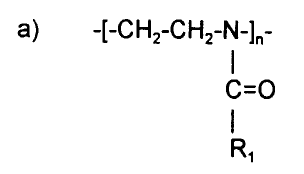 and/or 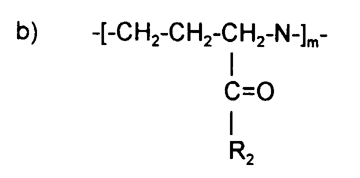 in which R₁ and R₂ independently of one another represent hydrogen and/or an optionally hydroxysubstituted hydrocarbon radical containing 1 to 36 carbon atoms and/or an aryl or aralkyl radical optionally substituted in the aromatic nucleus and/or a group corresponding to general formula I:
R₃-(OC₂H₅)ₚ-O-CH₂- (I)
where R₃ is an alkyl or alkenyl group containing 1 to 18 carbon atoms, more especially a methyl group, and p is a number of 1 to 10,
and the indices n and m independently of one another may assume values of 0 to 1000, with the proviso that the sum of n + m is between 2 and 1000,
if desired together with other additives typically encountered in powder lacquers,
as flow controllers for powder lacquers.

2. The use claimed in claim 1, characterized in that the polymers contain
50 to 100 mole-% of monomer units a) and
0 to 50 mole-% of monomer units b),
based on the total molar quantity of monomer units a) + b).

3. The use claimed in claim 1 or 2, characterized in that the substituents R¹ and R² are linear hydrocarbon radicals containing 11 to 17 carbon atoms and/or phenyl groups.

4. The use claimed in any of claims 1 to 3, characterized in that the sum total of the indices n + m is between 5 and 25.

5. The use claimed in any of claims 1 to 4, characterized in that they are mixtures of
10 to 100% by weight of polymers of monomer units a) and/or b) and
0 to 90% by weight of other additives typically encountered in powder lacquers,
based on the flow controller.

## Revendications

1. Utilisation d'un ou de plusieurs polymères qui renferment des unités monomères : 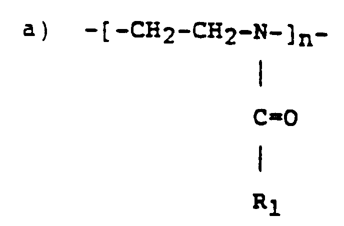 et/ou 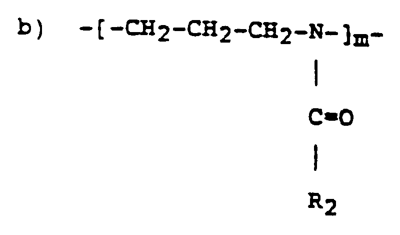 dans lesquelles,
R₁ et R₂, indépendamment l'un de l'autre, représentent de l'hydrogène et/ou un radical hydrocarboné éventuellement substitué par un hydroxy ayant de 1 à 36 atomes de carbone, et/ou un radical aryle ou aralkyle éventuellement substitué dans le noyau aromatique,
et/ou un radical de formule générale I,
R₃-(OC₂H₅)ₚ-O-CH₂- (I)
dans lequel
R₃ représente un groupe alkyle ou alkényle ayant de 1 à 18 atomes de carbone, en particulier un groupe méthyle et p est un nombre allant de 1 à 10, et les indices n et m, indépendamment l'un de l'autre, peuvent prendre des valeurs numériques allant de 0 à 1000 avec la restriction que la somme n + m se situe entre 2 et 1000,
si désiré conjointement avec d'autres additifs habituels dans les laques en poudre, en tant qu'agent de nivellement pour des laques en poudre.

2. Utilisation selon la revendication 1,
caractérisée en ce que
les polymères renferment de 50 à 100 % molaire d'unités monomères a) et de 0 à 50 % molaire d'unités monomères b) rapporté à la quantité molaire totale en unités monomères a) + b).

3. Utilisation selon l'une des revendications 1 ou 2,
caractérisée en ce que
les radicaux R₁ et R₂ représentent des radicaux hydrocarbonés linéaires ayant de 11 à 17 atomes de carbone et/ou des radicaux phényle.

4. Utilisation selon l'une des revendications 1 à 3,
caractérisée en ce que
la somme des indices n + m se situe entre 5 et 25.

5. Utilisation selon l'une des revendications 1 à 4,
caractérisée en ce qu'
ils représentent des mélanges de 10 à 100 % en poids de polymères à base d'unités monomères a) et/ou b) et de 0 à 90 % en poids d'autres additifs habituels dans les laques en poudre par rapport à l'agent de nivellement.
